# EUROPEAN PATENT APPLICATION

(11) **EP 4 488 931 A1**
(43) Date of publication of application: **08.01.2025**
(21) Application number: 22929719.7
(22) Date of filing: 01.03.2022
(51) Int. Cl.: G06T 7/00, G06F 21/57, G06N 20/00

(54) **EVALUATION METHOD, EVALUATION PROGRAM, AND INFORMATION PROCESSING APPARATUS**

(71) Applicant: FUJITSU LIMITED, Kawasaki-shi, Kanagawa 211-8588 (JP)
(72) Inventor: KASAHARA, Fumiyoshi, Kawasaki-shi, Kanagawa 211-8588 (JP); OIKAWA, Takanori, Kawasaki-shi, Kanagawa 211-8588 (JP)
(74) Representative: Hoffmann Eitle
(86) International application number: PCT/JP2022/008685
(87) International publication number: WO 2023/166571

(57) **Abstract**

An evaluation method, an evaluation program, and an information processing device that increase safety of a machine learning system are provided. Inference regarding each piece of input data using a classification model is performed on a plurality of queries that request execution of inference regarding individual input data. A certainty factor of each of classes into which the input data is classified is acquired for each of the queries by the inference. A difference in the certainty factor between a first class and a second class in each query is calculated. The plurality of queries is evaluated based on a tendency of an increase or a decrease in the calculated difference in the certainty factor.

## Description

### TECHNICAL FIELD

The present invention relates to an evaluation method, an evaluation program, and an information processing device.

### BACKGROUND ART

In recent years, there have been an increasing number of cases of data classification using machine learning. A machine learning process is divided into a training phase and an inference phase. In the training phase, a training process using training data and a correct answer label as inputs is performed, for example, to generate a trained machine learning model. In the inference phase, an inference process using inference target data as an input is performed with the trained machine learning model created in the training phase, and a classification result label is output as a result of the inference process.

In the inference process, when the inference target data is input, a plurality of inference candidates is obtained through the inference process using the trained machine learning model, and a certainty factor is calculated for each inference candidate. Then, the inference candidate having the certainty factor of the greatest value is then output as the classification result label.

In an inference phase in an image recognition system using machine learning, when a kind of noise called perturbations is applied to an input image, an event of erroneously determining the input image sometimes arises as a problem. In particular, there are cases where an input image is erroneously determined in an image recognition system due to an adversarial vulnerability attack against a trained machine learning model. For example, there is an attack in which data that looks like A to the human eye but is determined to be B in an inference process using a trained model is intentionally fabricated. As this data intentionally fabricated so as to cause an erroneous determination in the inference process, there is data called an adversarial example or the like.

Note that, although image data has been described as an example herein, an adversarial example may be generated not only as an image but also for any inference process for data of any kind. For example, in a process of recognizing voice and classifying the contents of a conversation, it is possible to generate an adversarial example in which noise that is unlikely to be perceived by humans is superimposed on voice data so that content that is heard as a conversation C by humans is determined to be D.

An adversarial example is generated by adding predetermined noise to an original image. This causes an event in which, for example, an image that is recognized as an image of a panda by the human eye is erroneously determined to be an image of a gibbon through an inference process, for example. To counter this, it is desirable to defend against attacks using such adversarial examples.

As methods for generating an adversarial example, there are many methods using internal information about a machine learning model, but it is difficult to access the internal information about a model with a publicly available service or the like. In such a case, it is conceivable that an attacker creates an adversarial example in a manner as described below.

The attacker adds appropriate noise to an image to be erroneously determined. Next, a query is transmitted to the machine learning model as the attack target, using the image to which the noise is added. Next, the attacker acquires an inference result for an image to be erroneously determined to which noise is added, as a response to the transmitted query. After that, the attacker updates the noise to be added, based on the acquired inference result. The attacker repeats inputting of a query using an image to which noise is added, acquisition of an inference result in response to the query, and update of noise using the acquired inference result, to obtain noise for causing erroneous determination and create an adversarial example. An attack that causes an inference result from a machine learning model using an adversarial example to be erroneously determined in this manner is called a query-based black box attack in some cases.

As a method for defending against this query-based black box attack, there is a technique for detecting an attacker's operation for generating an adversarial example for creating an adversarial example. For example, to generate appropriate noise, images in which noise is gradually changed are consecutively input, and therefore, a technique for detecting a query-based black box attack by detecting inputs of similar images has been proposed.

For example, as a technique for detecting an adversarial example, there is a technique by which a similarity metric of a set of images that have been input in chronological order is calculated, and an adversarial example is detected in a case where the number of similar images exceeds a threshold.

### CITATION LIST

### PATENT DOCUMENT

Patent Document 1: Japanese Laid-open Patent Publication No. 2020-200033

### SUMMARY OF INVENTION

### TECHNICAL PROBLEM

However, there may be cases where input data cannot be stored due to a recording capacity or privacy. In a case where input data cannot be obtained, it is difficult to detect an adversarial example by a method for detecting an adversarial example based on similar images as described above, for example.

The disclosed technology has been made in view of the above, and an object thereof is to provide an evaluation method, an evaluation program, and an information processing device that increase safety of machine learning.

### SOLUTION TO PROBLEM

In one mode, an evaluation method, an evaluation program, and an information processing device disclosed in the present application performs inference regarding each piece of input data using a classification model on a plurality of queries that request execution of inference regarding individual input data, acquires a certainty factor of each of classes into which the input data is classified for each of the queries by the inference, calculates a difference in the certainty factor between a first class and a second class in each query, and evaluates the plurality of queries based on a tendency of an increase or a decrease in the calculated difference in the certainty factor.

### ADVANTAGEOUS EFFECTS OF INVENTION

With one mode of an evaluation method, an evaluation program, and an information processing device disclosed in the present application, safety of machine learning may be increased.

### BRIEF DESCRIPTION OF DRAWINGS

FIG. 1 is a block diagram of an information processing device.
FIG. 2 is a diagram illustrating an outline of a query-based black box attack.
FIG. 3 is a diagram illustrating an example of change in certainty factor of each of the classes having the highest and second highest certainty factors in a case where a query-based black box attack has been conducted.
FIG. 4 is a diagram illustrating another example of change in certainty factor of each of the classes having the highest and second highest certainty factors in a case where a query-based black box attack has been conducted.
FIG. 5 is a diagram illustrating an example of change in the difference in certainty factor.
FIG. 6 is a diagram illustrating rank prediction points in accordance with changes in the difference in certainty factor.
FIG. 7 is a diagram illustrating an example case where linear regression is performed using queries obtained in a certain period of time.
FIG. 8 is a diagram illustrating some examples of change in the difference in certainty factor.
FIG. 9 is a flowchart of an attack detection process to be performed by the information processing device according to the first embodiment.
FIG. 10 is a diagram illustrating transition of the difference in certainty factor in the case of attack detection according to the second embodiment.
FIG. 11 is a hardware configuration diagram of an information processing device.

### DESCRIPTION OF EMBODIMENTS

In the description below, embodiments of an evaluation method, an evaluation program, and an information processing device disclosed in the present application will be explained in detail with reference to the drawings. Note that the embodiments described below do not limit the evaluation method, the evaluation program, and the information processing device disclosed in the present application.

### [First Embodiment]

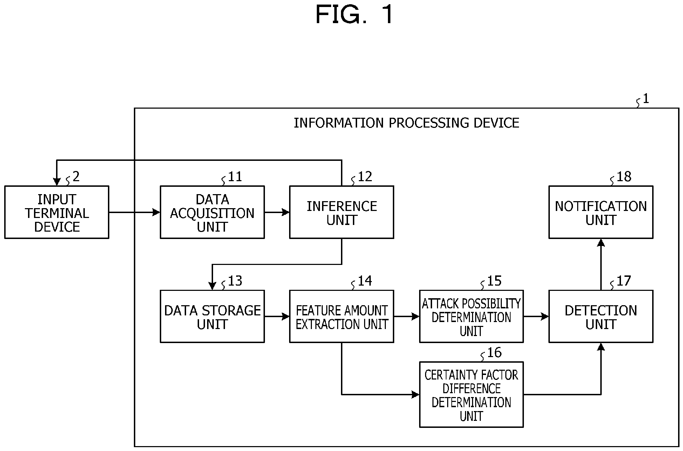

FIG. 1 is a block diagram of an information processing device. An information processing device 1 according to the present embodiment includes a data acquisition unit 11, an inference unit 12, a data storage unit 13, a feature amount extraction unit 14, an attack possibility determination unit 15, a certainty factor difference determination unit 16, a detection unit 17, and a notification unit 18. The information processing device 1 is coupled to an input terminal device 2 that is an external device via a network such as the Internet. The input terminal device 2 is a device that inputs inference target data on which the information processing device 1 is made to perform inference. There is a plurality of the input terminal devices 2. The user of an input terminal device 2 is not necessarily a person who causes the information processing device 1 to perform regular inference, but might be an attacker who aims at a query-based black box attack.

The data acquisition unit 11 acquires inference target data that is input from the input terminal device 2. Then, the data acquisition unit 11 then outputs the acquired inference target data to the inference unit 12.

The inference unit 12 includes a machine learning model that is a trained classification model that has been trained with training data. The inference unit 12 receives an input of inference target data from the data acquisition unit 11. Then, the inference unit 12 then inputs the inference target data to the trained machine learning model, and obtains an inference result as an output thereof. Here, the inference unit 12 obtains the certainty factor of each of the classes into which the inference target data is classified, as an inference result. After that, the inference unit 12 transmits the inference result to the input terminal device 2 that is the transmitter of the inference target data.

Also, the inference unit 12 acquires information about the class having the highest certainty factor and its certainty factor, and information about the class having the second highest certainty factor and its certainty factor, among the results of the inference performed on the input inference target data. Then, the inference unit 12 then stores the information about the class having the highest certainty factor and the class having the second highest certainty factor, and the respective certainty factors into the data storage unit 13, the information and the certainty factors being associated with identification information about the user who has input the query for performing the inference on the inference target data. The identification information about the user who has input the query for performing inference on the inference target data is identification information or the like about the input terminal device 2, for example.

The data storage unit 13 is a storage device such as a hard disk. The data storage unit 13 stores the information about the class having the highest certainty factor and the class having the second highest certainty factor in each query input from the inference unit 12, and stores each certainty factor associated with the identification information about the user who has input the query using the inference target data that is the target of the inference.

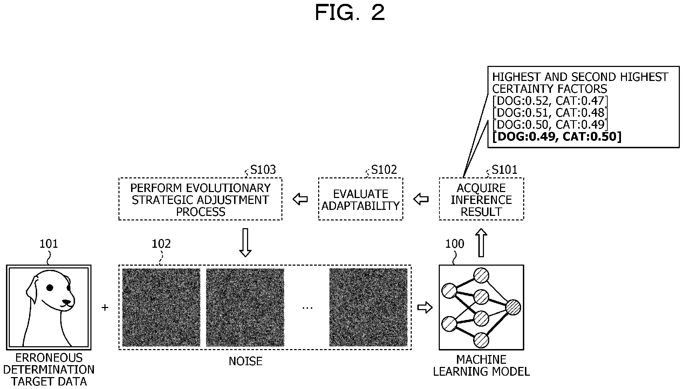

FIG. 2 is a diagram illustrating an outline of a query-based black box attack. Here, a query-based black box attack is briefly described with reference to FIG. 2. Here, a case where inference of image data is performed is described herein.

An attacker adds appropriate noise 102 to erroneous determination target data 101 to be erroneously determined, to generate attack data. Then, the attacker then inputs a query for performing inference on the attack data to a machine learning model 100 that is the target of the attack. Then, the attacker then causes the machine learning model 100 to perform inference, to acquire a result of inference performed on the attack data (step S101). In other words, the attacker inputs the attack data to the information processing device 1, and causes the inference unit 12 to perform inference, to obtain an inference result. A machine learning model included in the inference unit 12 corresponds to the machine learning model 100.

In this case, the inference result is the certainty factor of each class into which the attack data is classified. For example, a case where the class having the highest certainty factor is a dog, and the class having the second highest certainty factor is a cat in an inference result as illustrated in FIG. 2 is described. Further, it is assumed that the attacker aims to generate an adversarial example that causes the machine learning model 100 to erroneously determine that a dog image as erroneous determination target data 101 is a cat.

The attacker evaluates the adaptability of the obtained inference result, using an adaptability function or the like (step S102) . As a result, the attacker can determine how much the noise 102 at that time can convert the erroneous determination target data 101 into an image on which the intended erroneous determination will be made. Then, the attacker then performs an evolutionary strategic adjustment process on the noise 102 based on the evaluation of the adaptability, and adjusts and evolves the noise 102 so as to increase the probability of erroneous determination (step S103). After that, the attacker generates attack data in which the newly generated noise 102 is added to the erroneous determination target data 101, and causes the machine learning model 100 to perform inference again. (See https://arxiv.org/abs/2104.15064, for example)

By repeating steps S101 to S103, the attacker lowers the certainty factor of the dog ranking first in the inference result, and raises the certainty factor of the cat ranking second. Lastly, by reversing the certainty factor of the cat and the certainty factor of the dog, the attacker can generate noise that causes erroneous determination of the erroneous determination target data 101, and create an adversarial example.

As described above, in a case where a query-based black box attack is conducted, the certainty factor of the class having the highest certainty factor, which is the originally correct inference result, becomes lower in the inference result, and the certainty factor of the class having the second highest certainty factor, which is the target erroneous determination result, becomes higher. At last, the class having the highest certainty factor and the class having the second highest certainty factor are then reversed in the inference result, and an adversarial example can be created. Therefore, the information processing device 1 according to the present embodiment detects a possibility of an attack, using the characteristics of a query-based black box attack.

Referring back to FIG. 1, the explanation is continued. In the description below, a query that is input by a specific user, and a result of the inference will be explained. The feature amount extraction unit 14 determines whether a predetermined number of queries input to a specific input terminal device 2 by a specific user have been processed. The predetermined number may be 100, for example.

Here, the feature amount extraction unit 14 repeats the determination as to whether the predetermined number of queries have been processed, but the method for selecting the predetermined number is not particularly limited as long as the determination of the predetermined number of queries is selected every time so as to be a set including temporally new queries. For example, the feature amount extraction unit 14 may repeat the determination so as to select the predetermined number of subsequent queries, not including the queries already subjected to determination as the selection targets. Alternatively, the feature amount extraction unit 14 may perform a predetermined number of determinations so as to select queries on which some of the queries used in the previous determination are superimposed.

The feature amount extraction unit 14 acquires results of the inference of the predetermined number of queries from the data storage unit 13. Next, the feature amount extraction unit 14 extracts the highest certainty factor and the class having the highest certainty factor, and the second highest certainty factor and the class having the second highest certainty factor in the inference result regarding each query. Then, the feature amount extraction unit 14 then calculates a difference between the highest certainty factor and the second highest certainty factor in the inference result regarding each query. The difference between the highest certainty factor and the second highest certainty factor corresponds to the feature amount of each query that has been input by the user. Hereinafter, the difference between the certainty factor of the class in the first place and the certainty factor of the class in the second place will be referred to simply as a "difference in certainty factor".

After that, the feature amount extraction unit 14 outputs information about the difference in certainty factor in the inference result regarding each query among the predetermined number of queries, to the attack possibility determination unit 15. Also, the feature amount extraction unit 14 outputs, to the certainty factor difference determination unit 16, information about the difference in certainty factor in the inference result regarding each query among the predetermined number of queries, and information about the class having the highest certainty factor and information about the class having the second certainty factor in each query.

The attack possibility determination unit 15 obtains beforehand a time threshold and a threshold number of times for detecting a possibility of an attack. The attack possibility determination unit 15 receives, from the feature amount extraction unit 14, an input of the information about the difference in certainty factor in the result of the inference of each query among the predetermined number of queries.

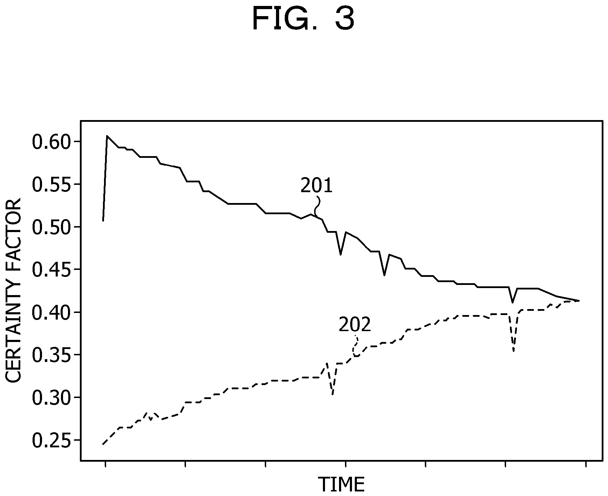

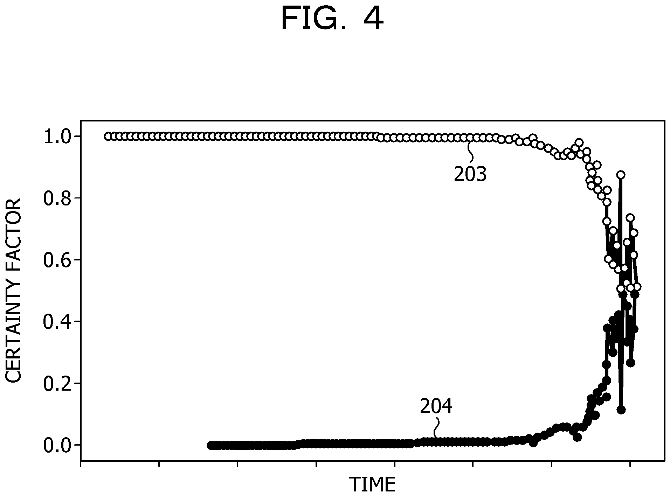

FIG. 3 is a diagram illustrating an example of change in certainty factor of each of the classes having the highest and second highest certainty factors in a case where a query-based black box attack has been conducted. Also, FIG. 4 is a diagram illustrating another example of change in certainty factor of each of the classes having the highest and second highest certainty factors in a case where a query-based black box attack has been conducted. In FIGS. 3 and 4, the abscissa axis indicates the passage of time, and the ordinate axis indicates the certainty factor.

A graph 201 in FIG. 3 indicates the transition of the certainty factor of the class having the highest certainty factor, and a graph 202 indicates the transition of the certainty factor of the class having the second highest certainty factor. For example, as an example case where a query-based black box attack has been conducted, there is a case where the certainty factor of the class in the first place drops linearly as indicated by the graph 201, and the certainty factor of the class in the second place rises linearly as indicated by the graph 202.

A graph 203 in FIG. 4 indicates the transition of the certainty factor of the class having the highest certainty factor, and a graph 204 indicates the transition of the certainty factor of the class having the second highest certainty factor. For example, as another example case where a query-based black box attack has been conducted, there is a case where the certainty factor of the class drops in the first place sharply at a certain point of time as indicated by the graph 203, and the certainty factor of the class in the second place rises sharply at a certain point of time as indicated by the graph 204.

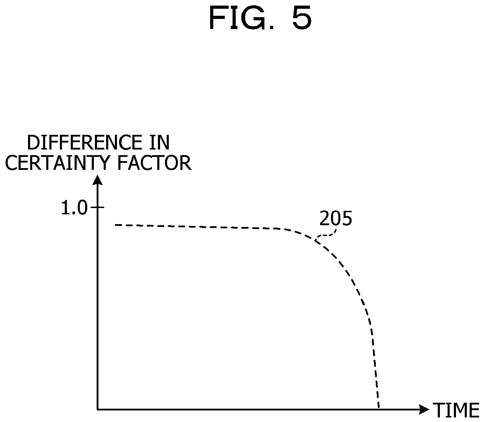

FIG. 5 is a diagram illustrating an example of change in the difference in certainty factor. FIG. 5 illustrates the change in the difference in certainty factor in a case where the certainty factors of the classes in the first and second places changed as illustrated in FIG. 4. In FIG. 5, the abscissa axis indicates the passage of time, and the ordinate axis indicates the difference in certainty factor. The difference in certainty factor in FIG. 5 is the value obtained by normalizing the difference in certainty factor, with 1.0 being the difference in certainty factor in a case where the highest certainty factor is 100%.

In a case where the certainty factors of the classes in the first and second places changed as illustrated in FIG. 4, the difference certainty factor drops sharply at a specific point of time after time passes, as indicated by a graph 205 in FIG. 5. As illustrated in FIGS. 3 and 4, the change in certainty factor of the classes in the first and second places varies. In any case, the difference between the certainty factor of the class in the first place and the certainty factor of the class in the second place approaches 0 even if the process of decrease differs between the two certainty factors.

In view of this, the attack possibility determination unit 15 plots the difference in certainty factor for each query among the predetermined number of queries, in a coordinate space in which the ordinate axis indicates the difference in certainty factor and the abscissa axis indicates the passage of time as illustrated in FIG. 5. Next, the attack possibility determination unit 15 performs linear regression on the difference in certainty factor for each query among the predetermined number of queries, to obtain a regression line. Next, the attack possibility determination unit 15 obtains an intercept between the regression line and the time axis that is the abscissa axis. The intercept between the regression line and the time axis is the time at which the class having the highest certainty factor and the class having the second highest certainty factor are reversed as predicted from the current query, and will be hereinafter referred to as the "rank change predicted point".

The attack possibility determination unit 15 identifies a representative time of the predetermined number of queries. For example, the attack possibility determination unit 15 can set the representative time as the center time when the center query among the predetermined number of queries was input. However, the representative time may be any appropriate time that corresponds to one query among the predetermined number of queries, and may be the time of input of the last query among the predetermined number of queries, the time at which the predetermined number of queries was accumulated and the attack possibility determination unit 15 started to perform processing, or the like, for example.

Next, the attack possibility determination unit 15 determines whether the time from the representative time to the rank change predicted point is within the time threshold. In other words, the attack possibility determination unit 15 determines whether the rank change predicted point is included in the time from the representative time until the time when the time threshold elapses. The time threshold may be five minutes, for example. If the time from the representative time to the rank change predicted point is longer than the time threshold, the attack possibility determination unit 15 waits until the next predetermined number of queries are accumulated.

On the other hand, if the time from the representative time to the rank change predicted point is within the time threshold, the attack possibility determination unit 15 determines that an attack candidate is detected. Then, the attack possibility determination unit 15 then determines whether the number of consecutive times an attack candidate has been detected is equal to or larger than the threshold number of times. For example, the attack possibility determination unit 15 can set the threshold number of times as three.

In a case where the number of consecutive times an attack candidate has been detected is smaller than the threshold number of times, the attack possibility determination unit 15 waits until the next predetermined number of queries are accumulated. In a case where the number of consecutive times an attack candidate has been detected is equal to or larger than the threshold number of times, on the other hand, the attack possibility determination unit 15 detects a possibility of an attack. After that, the attack possibility determination unit 15 notifies the detection unit 17 that there is a possibility of an attack.

The attack possibility determination unit 15 detects an attack candidate in a case where the possibility is higher when the time threshold is shortened, and also detects an attack candidate in a case where the possibility is low when the time threshold is lengthened. Also, if the threshold number of times is made larger, the probability of erroneous detection of a possibility of an attack becomes lower, but the possibility of overlooking an attack becomes higher in the attack possibility determination unit 15. Conversely, if the threshold number of times is made smaller, the probability of erroneous detection of a possibility of an attack becomes higher, but the possibility of overlooking an attack becomes lower in the attack possibility determination unit 15. Therefore, the time threshold and the threshold number of times are preferably determined in accordance with the operation, with the probability of erroneous detection and the possibility of an overlooked attack being taken into consideration.

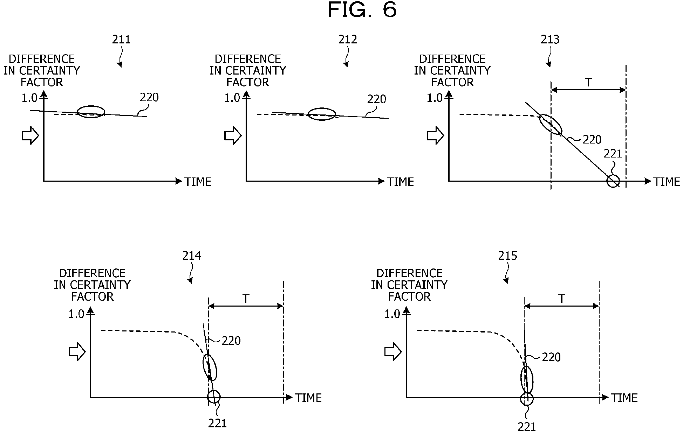

FIG. 6 is a diagram illustrating rank prediction points in accordance with changes in the difference in certainty factor. FIG. 6 illustrates the changes in the difference in certainty factor illustrated in FIG. 5 with chronological graphs 211 to 215. In each of the graphs 211 to 215, the abscissa axis indicates the passage of time, and the ordinate axis indicates the difference in certainty factor.

As indicated by the graphs 211 and 212, in a state where the change in the difference in certainty factor is small, a regression line 220 calculated by the attack possibility determination unit 15 does not have an intercept with the time axis within the time threshold.

On the other hand, as indicated by the graph 213, when the difference in certainty factor becomes smaller, the regression line 220 has a slope that declines as time passes, and a rank change predicted point 221 that is an intercept with the time axis is included between the representative time and a time threshold T.

After that, in a case where the difference in certainty factor continues to become smaller, as illustrated in the graphs 214 and 215, a state in which the rank change predicted point 221 is included between the representative time and the time threshold T continues. In other words, in a case where a state in which the rank change predicted point 221 is included between the representative time and the time threshold T continues, it is safe to say that the possibility of an attack is high. Therefore, as described above, the attack possibility determination unit 15 determines that there is a possibility of an attack in a case where the number of the rank change predicted points that are consecutively generated and fall within the time threshold exceeds the threshold number of times.

Here, the attack possibility determination unit 15 according to the present embodiment performs linear regression using the inference results with respect to the predetermined number of queries, to calculate the rank change predicted points. In addition to this, the attack possibility determination unit 15 may perform linear regression using the inference results with respect to the queries accumulated in a certain period of time, to calculate rank change predicted points. In that case, the feature amount extraction unit 14 acquires data from the data storage unit 13 every certain period, and the attack possibility determination unit 15 calculates the rank change predicted points, using the acquired data.

However, in a case where the attack possibility determination unit 15 calculates the rank change predicted point using the queries obtained in a certain period of time, it is conceivable that the number of accumulated queries is small. In that case, the attack possibility determination unit 15 creates a regression line with a small number of pieces of data, and it is conceivable that the regression line does not accurately reflect the change in the difference in certainty factor.

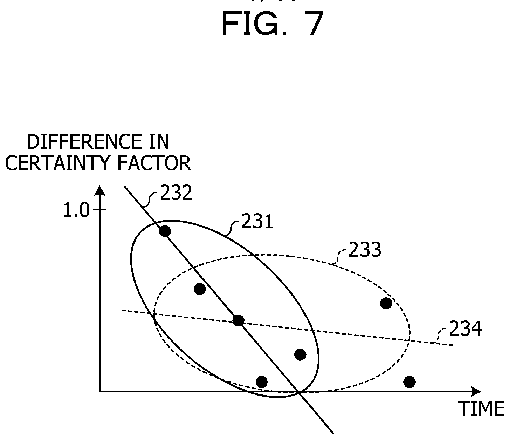

FIG. 7 is a diagram illustrating an example case where linear regression is performed using queries obtained in a certain period of time. For example, the attack possibility determination unit 15 generates a regression line 232, using the difference in certainty factor included in a range 231. On the other hand, using the difference in certainty factor included in a range 233, the attack possibility determination unit 15 generates a regression line 234. As described above, the slope of the regression line 232 and the slope of the regression line 234 are greatly different only with one point, and it cannot be said that the change in the difference in certainty factor is accurately reflected. Therefore, in a case where it is desirable to perform more accurate attack detection, the attack possibility determination unit 15 preferably calculates rank change predicted points for each predetermined number of queries.

Referring back to FIG. 1, the explanation is continued. The certainty factor difference determination unit 16 has a certainty factor difference threshold that has been determined beforehand. For example, the certainty factor difference determination unit 16 can set the certainty factor threshold to 0.2, in a case where the difference in certainty factor is normalized, with the difference of the certainty factor of 100% of the class in the first place from that of the class in the second place being 1.

The certainty factor difference determination unit 16 receives, from the feature amount extraction unit 14, an input of information about the difference between the highest certainty factor and the second highest certainty factor in the inference result regarding each query among the predetermined number of queries.

Next, the certainty factor difference determination unit 16 compares the differences in certainty factor between the respective queries, and identifies the smallest value of the differences in certainty factor among the predetermined number of queries. Next, the certainty factor difference determination unit 16 determines whether the smallest value of the differences in certainty factors is equal to or smaller than the certainty factor threshold. When the smallest value of the differences in certainty factor is equal to or smaller than the certainty factor threshold, the certainty factor difference determination unit 16 determines that there is a possibility of an attack. Then, the certainty factor difference determination unit 16 then notifies the detection unit 17 of the detected possibility of an attack. In a case where the smallest value of the differences certainty factor is greater than the certainty factor threshold, on the other hand, the certainty factor difference determination unit 16 determines that the possibility of attack is low, and ends the process.

Here, in a case where the certainty factor difference threshold is low, the certainty factor difference determination unit 16 detects a possibility of an attack when the possibility is high. Conversely, in a case where the certainty factor difference threshold is high, the certainty factor difference determination unit 16 detects a possibility of an attack even if the possibility is low to some degree. As described above, the certainty factor threshold is preferably determined depending on how high a possibility is to be detected.

In a case where the attack possibility determination unit 15 has detected a possibility of an attack, the detection unit 17 receives a notification of the detected possibility of an attack from the attack possibility determination unit 15. Likewise, in a case where the certainty factor difference determination unit 16 has detected a possibility of an attack, the detection unit 17 receives a notification of the detected possibility of an attack from the certainty factor difference determination unit 16. In a case where the detection unit 17 receives a notification of a detected possibility of an attack from the attack possibility determination unit 15 and the certainty factor difference determination unit 16, the detection unit 17 detects a possibility of a query-based black box attack. Then, the detection unit 17 then notifies the notification unit 18 of the detected possibility of a query-based black box attack. As described above, the information processing device 1 according to the present embodiment evaluates queries, based on the tendency of increase or decrease in the difference in certainty factor.

The notification unit 18 receives a notification of the detected query-based black box attack from the detection unit 17. Then, the notification unit 18 displays information about the detection on a monitor or the like, to notify the user of the information processing device 1 of the detected query-based black box attack, for example.

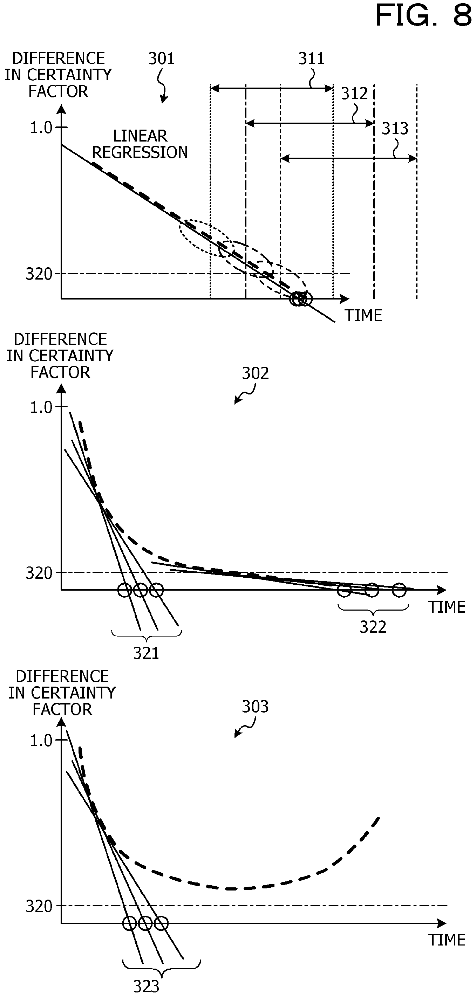

FIG. 8 is a diagram illustrating some examples of change in the difference in certainty factor. In each of graphs 301 to 303, the abscissa axis indicates the passage of time, and the ordinate axis indicates the difference in certainty factor.

As illustrated in the graph 301, for example, a case where the difference in certainty factor drops linearly is described. In this case, the positions of ranges 311 to 313 within which the rank change predicted points from the representative time to the time threshold fall gradually change. Further, the regression lines obtained from the differences in certainty factor among the predetermined number of queries each have an intercept on the time axis in the range 311 to 313. In view of this, the attack possibility determination unit 15 detects a possibility of an attack. Moreover, the smallest value of the differences in certainty factor is equal to or smaller than a certainty factor difference threshold 320, and the certainty factor difference determination unit 16 detects a possibility of an attack. Therefore, in this case, the detection unit 17 detects a possibility of a query-based black box attack.

Further, as illustrated in the graph 302, a case where the curve representing the difference in certainty factor is a downwardly convex curve and approaches near 0 is described. In this case, a number of rank change predicted points equal to or larger than the threshold number of times consecutively fall within the range from the representative time to the time threshold at the point of time when a rank change predicted point 321 appears. In view of this, the attack possibility determination unit 15 detects a possibility of an attack. At this point of time, however, the difference in certainty factor is still larger than the certainty factor difference threshold, and the certainty factor difference determination unit 16 does not detect a possibility of an attack. Therefore, the detection unit 17 does not detect a query-based black box attack. After that, a number of rank change predicted points equal to or larger than the threshold number of times again consecutively fall within the range from the representative time to the time threshold at the point of time when the rank change predicted point 321 appears. In view of this, the attack possibility determination unit 15 detects a possibility of an attack. Then, as the difference in certainty factor is equal to or smaller than a certainty factor difference threshold this time, the certainty factor difference determination unit 16 then detects a possibility of an attack. Therefore, the detection unit 17 detects a possibility of a query-based black box attack.

Further, as illustrated in the graph 303, a case where the curve representing the difference in certainty factor is a downwardly convex curve and approaches near 0 is described. In this case, a number of rank change predicted points equal to or larger than the threshold number of times consecutively fall within the range from the representative time to the time threshold at the point of time when a rank change predicted point 323 appears. In view of this, the attack possibility determination unit 15 detects a possibility of an attack. At this point of time, however, the difference in certainty factor is still larger than the certainty factor difference threshold, and the certainty factor difference determination unit 16 does not detect a possibility of an attack. After that, the difference in certainty factor does not exceed the certainty factor difference threshold, and a number of rank change predicted points equal to or larger than the threshold number of times do not consecutively fall within the range from the representative time to the time threshold. As a result, the detection unit 17 does not detect any query-based black box attack. In this case, the difference in certainty factor merely drops by chance, and it is considered that there is not an attack. Thus, the information processing device 1 can avoid erroneous determination.

Here, a possibility of an attack is detected from the difference in certainty factor between the class having the highest certainty factor and the class having the second highest certainty factor in the present embodiment. However, the present invention is not limited to this, and a possibility of an attack may be detected from the difference in certainty factor between the class in the first place and a class in a place other than the second place. Here, the class in a place other than the second place does not include the class in the first place. Here, any of the classes in the places other than the second place will be the class in the second place. Therefore, it can be considered that the difference between the class in the first place and the class in the second place only needs to be used. However, there may be a case where the difference in certainty factor between the class in the first place and the class in the second place becomes rapidly smaller. In that case, the information processing device 1 can detect issuance of a query intended to attack at an early stage before a class in a place other than the second place becomes the class in the second place.

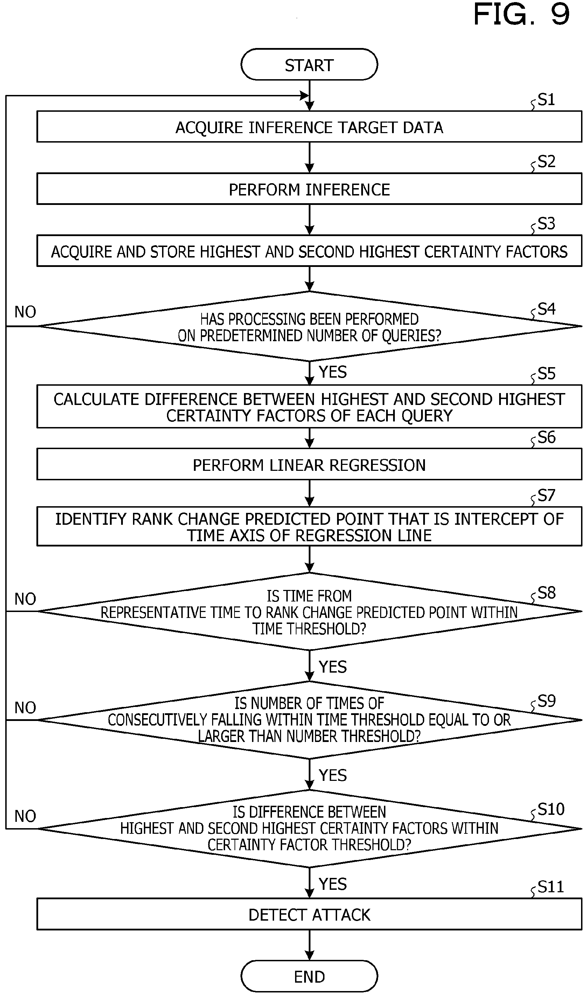

FIG. 9 is a flowchart of an attack detection process to be performed by the information processing device according to the first embodiment. Next, the flow of an attack detection process to be performed by the information processing device 1 according to the present embodiment is described with reference to FIG 9.

The data acquisition unit 11 acquires inference target data that is input from the input terminal device 2 (step S1). Then, the data acquisition unit 11 then outputs the acquired inference target data to the inference unit 12.

The inference unit 12 receives an input of inference target data from the data acquisition unit 11. Then, the inference unit 12 then inputs the inference target data to a trained machine learning model, and performs inference on the inference target data, to obtain an inference result (step S2).

The inference unit 12 acquires the highest and second highest certainty factors from the inference result, and saves and stores the certainty factors into the data storage unit 13 (step S3).

The feature amount extraction unit 14 checks the data accumulated in the data storage unit 13, and determines whether an inference process has been performed on a predetermined number of queries (step S4). If processing of the predetermined number of queries is not completed (step S4: No), the attack detection process returns to step S1.

If the predetermined number of queries have been processed (step S4: Yes), on the other hand, the feature amount extraction unit 14 calculates a difference between the highest certainty factor and the second highest certainty factor of each query (step S5).

The attack possibility determination unit 15 plots the difference in certainty factor calculated by the feature amount extraction unit 14 for each query among the predetermined number of queries, in a two-dimensional coordinate space in which the ordinate axis indicates the difference in certainty factor and the abscissa axis indicates the passage of time. Next, the attack possibility determination unit 15 performs linear regression on the difference in certainty factor for each query among the predetermined number of queries (step S6).

Next, the attack possibility determination unit 15 identifies the rank change predicted point that is an intercept between the regression line obtained by the linear regression and the time axis that is the abscissa axis (step S7).

Next, the attack possibility determination unit 15 determines the representative time in the predetermined number of queries. Then, the attack possibility determination unit 15 then determines whether the time from the representative time to the rank change predicted point is within the time threshold (step S8). If the time from the representative time to the rank change predicted point is longer than the time threshold (step S8: No), the attack detection process returns to step S1.

On the other hand, if the time from the representative time to the rank change predicted point is within the time threshold (step S8: Yes), on the other hand, the attack possibility determination unit 15 determines whether a rank change predicted point that is within the time threshold from the representative time has consecutively appeared a number of times equal to or larger than the threshold number of times (step S9).

If a rank change predicted point that is within the time threshold from the representative time does not consecutively appear a number of times equal to or larger than the threshold number of times (step S9: No), the attack detection process returns to step S1.

If a rank change predicted point that is within the time threshold from the representative time consecutively appears a number of times that is equal to or larger than the threshold number of times (step S9: Yes), on the other hand, the attack possibility determination unit 15 notifies the detection unit 17 of a detected possibility of an attack. Further, the certainty factor difference determination unit 16 compares the differences in certainty factor between the respective queries, and identifies the smallest value of the differences in certainty factor among the predetermined number of queries. Next, the certainty factor difference determination unit 16 determines whether the smallest value of the differences in certainty factors is equal to or smaller than the certainty factor threshold (step S10). If the smallest value of the differences in certainty factor is greater than the certainty factor threshold (step S10: No), the attack detection process returns to step S1.

If the smallest value of the differences in certainty factor is equal to or smaller than the certainty factor threshold (step S10: Yes), on the other hand, the certainty factor difference determination unit 16 determines that there is a possibility of an attack. Then, the certainty factor difference determination unit 16 then notifies the detection unit 17 of the detected possibility of an attack. The detection unit 17 receives a notification of the detected possibility of an attack from both the attack possibility determination unit 15 and the certainty factor difference determination unit 16. Thus, the detection unit 17 detects a possibility of a query-based black box attack (step S11).

As described above, the information processing device according to the present embodiment calculates the difference in certainty factor between the first position and another position in an inference result regarding each query among a predetermined number of queries, and performs linear regression in a coordinate space indicating the difference in certainty factor and the passage of time, using the calculated difference in certainty factor. Then, the information processing device then detects a possibility of a query-based black box attack, on the condition that events each having an intercept between the regression line and the time axis within a time threshold has consecutively occurred a threshold number of times or more, and the smallest value of the difference in certainty factor is equal to or smaller than a certainty factor difference threshold. In other words, the information processing device according to the present embodiment evaluates queries, based on the tendency of increase or decrease in the difference in certainty factor.

As a result, without the use of input data, it is possible to report detection of an attack and restrict adversarial example generating activities, regarding the query suspected of a query-based black box attack. Thus, it is possible to protect the machine learning system from attack and increase safety, while reducing increase in storage capacity and protecting privacy of the user. Furthermore, it is determined that there is a possibility of an attack in a case where the difference in certainty factor is equal to or smaller than a certain value. Thus, it is possible to detect a behavior of an attack that cannot be seen in a similar image input that is not an attack. Accordingly, it is possible to reduce erroneous detection of an attack in a case where the difference in certainty factor is reduced not by an attack but by chance. Further, it is possible to eliminate an authorized user from being erroneously blocked, and thus, increase the reliability of the machine learning system.

### [Second Embodiment]

Next, a second embodiment is described. An information processing device 1 according to the present embodiment is also illustrated in the block diagram in FIG. 1. The information processing device 1 according to the present embodiment differs from that of the first embodiment in that an attack is detected in a case where the places of the class having the highest certainty factor and the class having the second highest certainty factor are switched. In the description below, explanation of operations of the respective components similar to those of the first embodiment will not be made.

The feature amount extraction unit 14 outputs a difference in certainty factor regarding each query among a predetermined number of queries, to the attack possibility determination unit 15. The feature amount extraction unit 14 outputs information about the classes having the highest and second highest certainty factors in each query among the predetermined number of queries, to the certainty factor difference determination unit 16.

As in the first embodiment, the attack possibility determination unit 15 performs linear regression using the differences in certainty factor to calculate rank change predicted points, and detects a possibility of an attack in a case where a state in which the rank change predicted point falls within the time threshold from the representative time consecutively occurs the threshold number of times or more.

The certainty factor difference determination unit 16 receives, from the feature amount extraction unit 14, an input of information about the classes having the highest and second highest certainty factors in each query among the predetermined number of queries. Then, the certainty factor difference determination unit 16 then determines whether the classes in the first place and the second place in terms of certainty factor have been switched. For example, in a case where the class in the first place and the class in the second place in the last query among the predetermined number of queries have been reversed, the certainty factor difference determination unit 16 determines that the class in the first place and the class in the second place in terms of certainty factor have been switched. Alternatively, the certainty factor difference determination unit 16 may determine that the class in the first place and the class in the second place in terms of certainty factor have been switched, in a case where the ratio of the classes reversed from the classes originally in the first place and the second place exceeds a certain ratio among a certain number of queries from the last query among the predetermined number of queries. When it is determined that the classes in the first place and the second place have been switched in terms of certainty factor, the certainty factor difference determination unit 16 then detects an attack. Then, the certainty factor difference determination unit 16 then notifies the detection unit 17 of the detected attack.

In a case where the detection unit 17 is notified of a detected possibility of an attack from the attack possibility determination unit 15 and is notified of the detected attack from the certainty factor difference determination unit 16, the detection unit 17 detects a query-based black box attack.

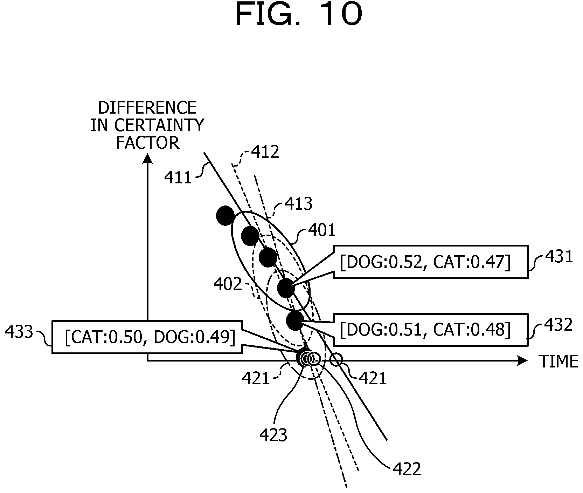

FIG. 10 is a diagram illustrating transition of the difference in certainty factor in the case of attack detection according to the second embodiment. In FIG. 10, the abscissa axis indicates the passage of time, and the ordinate axis indicates the difference in certainty factor. Here, a case where a query-based black box attack for causing an image of a dog to be erroneously determined to be an image of a cat is conducted is described as an example herein.

For example, the attack possibility determination unit 15 performs linear regression using a certainty factor difference group 401, to calculate a regression line 411. Then, the attack possibility determination unit 15 then calculates a rank change predicted point 421, and determines that the rank change predicted point 421 falls within the time threshold from the representative time. Further, a certainty factor 431 in the last query is 0.51 for the dog, and is 0.48 for the cat. In this case, if the class having the highest certainty factor is the dog, and the class having the second highest certainty factor is the cat, the certainty factor difference determination unit 16 does not detect an attack. Accordingly, the detection unit 17 does not detect a query-based black box attack.

Next, the attack possibility determination unit 15 performs linear regression using a certainty factor difference group 402, to calculate a regression line 412. Then, the attack possibility determination unit 15 then calculates a rank change predicted point 422, and determines that the rank change predicted point 422 falls within the time threshold from the representative time. Further, a certainty factor 432 in the last query is 0.50 for the dog, and is 0.49 for the cat. In this case, the certainty factor difference determination unit 16 does not detect an attack either. Accordingly, the detection unit 17 does not detect a query-based black box attack.

Next, the attack possibility determination unit 15 performs linear regression using a certainty factor difference group 403, to calculate a regression line 413. Then, the attack possibility determination unit 15 then calculates a rank change predicted point 423, and determines that the rank change predicted point 423 falls within the time threshold from the representative time. Since the rank change predicted points 421 to 423 consecutively fall within the time threshold from the representative time in this case, the attack possibility determination unit 15 detects a possibility of an attack when the threshold number of times is three. Further, a certainty factor 433 in the last query is 0.50 for the cat, and is 0.49 for the dog. In this case, the certainty factor difference determination unit 16 detects an attack by detecting a change in place between the class in the first place and the class in the second place in terms of certainty factor. Therefore, the detection unit 17 detects a query-based black box attack.

As described above, the information processing device according to the present embodiment detects a query-based black box attack on the condition that the places of the highest certainty factor and the second highest certainty factor are switched, in addition to the condition that the rank change predicted points that fall within the time threshold from the representative time have consecutively appeared the threshold number of times or more. If a possibility of an attack is detected in a case where the difference in certainty factor is small as in the first embodiment, there is a possibility that an alert is frequently generated by the information processing device. On the other hand, the information processing device according to the present embodiment raises an alert in a case where a possibility of an attack is high to a certain degree, on the condition that the places of the class in the first place and the class in the second place are reversed. As a result, the probability of prevention of erroneous determination can be increased, and a query-based black box attack can be detected more accurately. Thus, safety may be increased while the machine learning system is protected from attack.

### (Hardware Configuration)

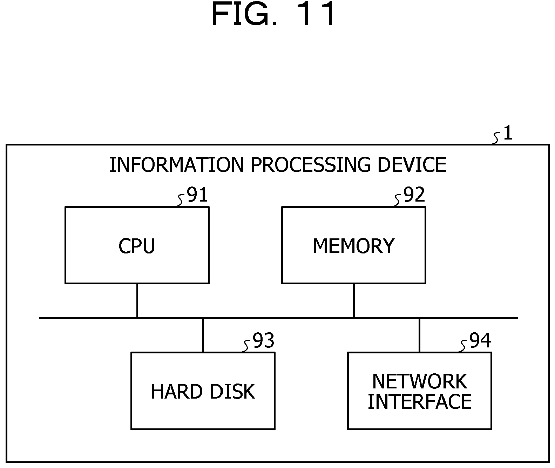

FIG. 11 is a hardware configuration diagram of an information processing device. Next, an example of a hardware configuration for implementing each function of the information processing device 1 is described with reference to FIG. 11.

As illustrated in FIG. 11, the information processing device 1 includes a central processing unit (CPU) 91, a memory 92, a hard disk 93, and a network interface 94, for example. The CPU 91 is coupled to the memory 92, the hard disk 93, and the network interface 94 via a bus.

The network interface 94 is an interface for communication between the information processing device 1 and an external device. The network interface 94 relays communication with the input terminal device 2, for example.

The hard disk 93 is an auxiliary storage device. The hard disk 93 implements the functions of the data storage unit 13 exemplified in FIG. 1. Also, the hard disk 93 stores various programs including programs for implementing the functions of the data acquisition unit 11, the inference unit 12, the feature amount extraction unit 14, the attack possibility determination unit 15, the certainty factor difference determination unit 16, the detection unit 17, and the notification unit 18 exemplified in FIG. 1.

The memory 92 is a main storage device. For example, a dynamic random access memory (DRAM) may be used as the memory 92.

The CPU 91 reads various programs from the hard disk 93, and loads them into the memory 92 for execution. As a result, the CPU 91 implements the functions of the data acquisition unit 11, the inference unit 12, the feature amount extraction unit 14, the attack possibility determination unit 15, the certainty factor difference determination unit 16, the detection unit 17, and the notification unit 18 exemplified in FIG. 1.

### REFERENCE SIGNS LIST

- 1: Information processing device

- 2: Input terminal device
- 11: Data acquisition unit
- 12: Inference unit
- 13: Data storage unit
- 14: Feature amount extraction unit
- 15: Attack possibility determination unit
- 16: Certainty factor difference determination unit
- 17: Detection unit
- 18: Notification unit

## Claims

1. An evaluation method for causing a computer to perform a process comprising:
performing inference regarding each piece of input data using a classification model on a plurality of queries that request execution of inference regarding individual input data;
acquiring a certainty factor of each of classes into which the input data is classified for each of the queries by the inference;
calculating a difference in the certainty factor between a first class and a second class in each query; and
evaluating the plurality of queries based on a tendency of an increase or a decrease in the calculated difference in the certainty factor.

2. The evaluation method according to claim 1, wherein the process further includes evaluating the plurality of queries based on a tendency of an increase or a decrease in the difference in the certainty factor between the class that is the highest in the certainty factor and the class that is the second highest in the certainty factor.

3. The evaluation method according to claim 1, wherein the process further includes:
detecting an attack candidate state in which the difference in the certainty factor becomes smaller at a ratio equal to or more than a certain ratio, and determining that there is a first possibility of an attack when the attack candidate state has been consecutively detected a number of times equal to or more than a threshold number of times;
determining that there is a second possibility of an attack when the difference in the certainty factor becomes equal to or smaller than a certainty factor difference threshold, and
evaluating that there is a possibility that the plurality of queries is an attack, when determining that there is the first possibility and determining that there is the second possibility.

4. The evaluation method according to claim 3, wherein the process further includes:
obtaining a regression line by performing linear regression using the difference in the certainty factor and an input time for each of a plurality of pieces of the input data; and
detecting the attack candidate state when a time at which the difference in the certainty factor disappears in the regression line falls within a time threshold from a representative time regarding the input time.

5. The evaluation method according to claim 1, wherein the process further includes:
detecting an attack when places of the first class and the second class are switched; and
evaluating that the plurality of queries is an attack, when determining that there is the first possibility of the attack, and detecting the attack.

6. An evaluation program for causing a computer to perform a process comprising:
performing inference regarding each piece of input data using a classification model on a plurality of queries that request execution of inference regarding individual input data;
acquiring a certainty factor of each of classes into which the input data is classified for each of the queries by the inference;
calculating a difference in the certainty factor between a first class and a second class in each query; and
evaluating the plurality of queries based on a tendency of an increase or a decrease in the calculated difference in the certainty factor.

7. An information processing device comprising:
an inference unit configured to perform inference regarding each piece of input data using a classification model on a plurality of queries that request execution of inference regarding individual input data and acquire a certainty factor of each of classes into which the input data is classified for each of the queries by the inference;
a feature amount extraction unit configured to calculate a difference in the certainty factor between a first class and a second class in each query; and
an evaluation unit configured to evaluate the plurality of queries based on a tendency of an increase or a decrease in the calculated difference in the certainty factor.
